# EUROPÄISCHE PATENTSCHRIFT

(11) **EP 1 366 943 B1**
(45) Veröffentlichungstag und Bekanntmachung des Hinweises auf die Patenterteilung: **14.09.2005**
(21) Anmeldenummer: 03011177.7
(22) Anmeldetag: 27.05.2003
(51) Int. Cl.: B60J 7/22

(54) **Vorrichtung zum Lenken einer Luftströmung im Bereich einer Dachöffnung**
Device for guiding an air flow in the region of a roof opening
Dispositif de guidage d'un flux d'air dans la zone d'une ouverture de toit

(30) Priorität: 29.05.2002 DE 10223940; 09.12.2002 DE 20219113 U
(43) Veröffentlichungstag der Anmeldung: 03.12.2003
(73) Patentinhaber: ArvinMeritor GmbH, 63128 Dietzenbach (DE)
(72) Erfinder: Vogel, Stefan, 63683 Ortenberg (DE); Pfeifer, Günther, 63834 Sulzbach (DE); Arnold, Rainer, 63679 Schotten (DE); Schnabel, Margit, 63667 Nidda (DE); Prager, Tobias, 60326 Frankfurt/Main (DE)
(74) Vertreter: Kitzhofer, Thomas

(56) Entgegenhaltungen:
- DE-A- 3 833 046
- DE-A- 3 913 567
- DE-A- 10 117 364
- DE-A- 19 732 699
- DE-C- 19 520 348
- US-A- 5 052 745

## Beschreibung

Die Erfindung betrifft eine Vorrichtung zur Lenkung der Luftströmung im Bereich einer Dachöffnung, insbesondere am vorderen Rand der Öffnung eines Schiebedachs, nach dem Oberbegriff des Anspruchs 1.

Zusatzabweiser haben die Aufgabe, das sogenannte Wummern zu verhindern, indem die dem Wummern zugrundeliegenden niederfrequenten Druckpulsationen zumindest weitgehend vermieden werden. Bisherige Zusatzabweiser werden vom Deckel des Schiebe-Hebedachs in der geschlossenen Stellung überdeckt, wodurch die Vorrichtung samt Deckel einen hohen Platzbedarf in Z-Richtung hat. Ferner legt der zurückfahrende Deckel sofort den zwischen dem Windabweiser und dem Deckel liegenden Zusatzabweiser frei, was aus strömungstechnischen Gründen nicht immer gewünscht ist.

Aus der gattungsgemäßen DE-A-39 13 567 sind verschiedene Windabweiser mit daran angebrachten Zusatzabweisern bekannt, die u.a. aus einer Kassette parallel zum Windabweiser nach hinten austreten. Ferner sind am hinteren Rand des Windabweisers schwenkbar angebrachte Zusatzabweiser gezeigt.

Aufgabe der Erfindung ist es, eine Vorrichtung zu schaffen, die mehr konstruktive Freiheit gibt.

Diese Aufgabe wird durch eine Vorrichtung nach Anspruch 1 gelöst. Bei der erfindungsgemäßen Vorrichtung liegt der Zusatzabweiser geschützt unterhalb des Windabweisers, er muß nicht mehr zwingend vom Deckel bedeckt werden. Eine geringe Bauhöhe in Z-Richtung ergibt sich, wenn Windabweiser und Deckel in der geschlossenen Stellung hintereinander angeordnet sind, vorzugsweise ohne Überlappung. Eine Verbesserung ergibt sich ferner, wenn der Deckel in der geschlossenen Stellung an der Stirnseite des Windabweisers anliegt, d.h., der Zusatzabeiser ragt nicht zwischen Windabweiser und Deckel, was die Dichtwirkung verbessert.

Aufgabe der Erfindung ist es ferner, eine Vorrichtung zu schaffen, die einfach aufgebaut ist, aus wenigen Teilen besteht und zuverlässig bei hohem Komfort betätigt werden kann. Darüber hinaus soll sich die Vorrichtung durch ein geringes Gewicht auszeichnen.

Dies wird durch eine mechanische Steuervorrichtung erreicht, die mit dem Zusatzabweiser verbunden ist und eine dachfeste, permanente Koppelungsstelle besitzt. Zumindest bei seiner Ausstellbewegung greift der Windabweiser an der Steuervorrichtung an und verschiebt diese so, daß durch die Verschiebung der Zusatzabweiser in Richtung seiner ausgefahrenen Position bewegt wird. Die erfindungsgemäße Vorrichtung sieht gemäß einer Lösung keinen separaten motorischen Antrieb für den Zusatzabweiser vor. Vielmehr wird über eine mechanische Koppelung die Bewegung des Windabweisers selbst in eine Bewegung des Zusatzabweisers umgesetzt, es entsteht also eine Zwangskoppelung der beiden Bewegungen zumindest in Richtung der ausgefahrenen Stellung des Zusatzabweisers. Diese einfache mechanische Koppelung verringert den Aufwand für den Antrieb des Zusatzabweisers, und sie kann einfach und aus wenigen Teilen bestehend ausgeführt sein. Die Steuervorrichtung ist, wie bereits erwähnt, einerseits über die Koppelungsstelle dachfest und andererseits mit dem Windabweiser verbunden, um durch die Relativbewegung des Windabweisers zum Dach bei dessen Ausstellbewegung zu einer Verschiebung der Steuervorrichtung zu kommen.

Alternativ hierzu kann die mechanische Steuervorrichtung aber auch mit einem am Fahrzeugdach verfahrbaren Teil gekoppelt sein, z. B. mit einem längs einer Führung verfahrbaren Gleiter, der durch den Seilantrieb des Deckels bewegt wird.

Es wäre zwar denkbar, daß über die mechanische Koppelung der Zusatzabweiser zu Beginn seiner Bewegung in Richtung der ausgefahrenen Stellung bewegt wird, um anschließend beispielsweise durch einen Kraftspeicher ganz in die ausgefahrene Stellung zu gelangen, bevorzugt jedoch verschiebt die Steuervorrichtung den Zusatzabweiser auf seinem gesamten Weg zwischen seiner Grundstellung und seiner ausgefahrenen Stellung.

Umgekehrt kann auch die Rückstellung des Zusatzabweisers in die Grundstellung bei Einfahren des Windabweisers teilweise oder vollständig nur über die mechanische Steuervorrichtung, die dann in beiden Bewegungsrichtungen gleichermaßen wirkt, erfolgen.

Gemäß der bevorzugten Ausführungsform weist die mechanische Steuervorrichtung ein flexibles Kraftübertragungsmittel, beispielsweise ein Band oder Seil, oder einen Bowdenzug auf. Dies hat den Vorteil, daß sich diese Teile leicht im Fahrzeugdach oder im Rahmen des Schiebedachs unterbringen lassen, und zwar auch in gebogenen Aufnahmekanälen. Darüber hinaus sind solche flexiblen Kraftübertragungsmittel sehr leicht und lassen sich im Gegensatz zu Gestängen ohne großen Aufwand klapperfrei unterbringen.

Gemäß einer Ausführungsform ist die Steuervorrichtung mit einem Kraftspeicher gekoppelt, der bestrebt ist, die Steuervorrichtung zu bewegen und den Zusatzabweiser in die Grundstellung zu bringen. Diese Ausführungsform hat den Vorteil, daß der Kraftspeicher beispielsweise den Zusatzabweiser federnd anstellen kann, das flexible Kraftübertragungsmittel ständig unter Vorspannung halten kann und/oder den Zusatzabweiser tatsächlich in die Grundstellung bringt, wenn der Windabweiser eingefahren wird.

Vorzugsweise ist der Kraftspeicher ein Federmechanismus, der optional auch Teil eines Aufrollmechanismus ist, ähnlich einem Fahrzeuggurtaufroller oder einem Rolladengurtaufroller.

Vorzugsweise ist am Windabweiser wenigstens eine Umlenkrolle zum Umlenken des Kraftübertragungsmittels vorgesehen.

Der Zusatzabweiser ist gemäß einer Ausführungsform zwischen den Enden des Kraftübertragungsmittels an diesem befestigt.

Der Zusatzabweiser kann aus der Grundstellung, von unterhalb des Windabweisers, längs einer Bahn bis über den hinteren Rand des Windabweisers hervorstehend in die ausgefahrene Stellung verschiebbar sein, wie eine Ausführungsform vorsieht. Das bedeutet, der Zusatzabweiser wird hier längs einer Bahn verfahren und nicht etwa geschwenkt, wobei natürlich auch eine kombinierte Verfahr- und Schwenkbewegung möglich wäre. Durch das Verfahren längs einer Bahn ist es beispielsweise möglich, den Zusatzabweiser in einer Art Kassette auf der Unterseite des Windabweisers unterzubringen, aus der dieser dann heraustritt, wenn der Windabweiser nahe seiner ausgefahrenen Stellung ist.

Die andere Möglichkeit, den Zusatzabweiser zu bewegen, besteht darin, ihn schwenkbar im Bereich des hinteren Randes am Windabweiser zu befestigen. Hierbei kann es vorteilhaft sein, die Schwenkachse mit der Achse des Aufrollmechanismus zusammenfallen zu lassen. Dies kann insbesondere zu einer erheblichen Platzersparnis und Teilereduzierung führen.

Der gegenüber dem hinteren Rand des Windabweisers in ausgefahrener Stellung vorstehende Teil des Zusatzabweisers kann federnd angestellt sein, um in Abhängigkeit von der Windgeschwindigkeit seine Winkellage zu verändern, sich also mit zunehmender Windgeschwindigkeit flacher zu stellen.

Um eine optimale Abdichtung zwischen Windabweiser und Deckel zu erlauben, wenn diese hintereinander angeordnet sind, ist vorgesehen, daß der Deckel unmittelbar an die hintere Stirnseite des Windabweiser anstößt, wobei vorzugsweise eine elastische Dichtung zwischen Windabweiser und Deckel liegt. Diese Dichtung ist üblicherweise die Deckeldichtung. Wenn der Zusatzabweiser z. B. zwischen die Dichtung und die hintere Stirnseite des Windabweisers ragen würde, wäre die Dichtwirkung schwerer erzielbar. Damit die Dichtung sichergestellt wird, ist gemäß einer bevorzugten Ausführungsform vorgesehen, daß der Zusatzabweiser in der nicht ausgefahrenen Stellung des Windabweisers gegenüber diesem nach hinten nicht vorsteht, d. h. nicht unter dem Deckel liegt, sondern nur unter dem Windabweiser.

Die mechanische Steuervorrichtung für den Zusatzabweiser ist zuvor bereits detailliert anhand einer mechanischen, insbesondere sogar einer mechanisch zwangsgesteuerten Koppelung diskutiert worden. Die Steuervorrichtung für den Zusatzabweiser kann darüber hinaus aber auch elektrisch, magnetisch oder über einen sogenannten Memory-Draht erfolgen. Entsprechende Steuervorrichtungen können auch für die Bewegung des Zusatzabweisers vorgesehen sein.

Die Steuervorrichtung für den Windabweiser, bevorzugt aber für den Zusatzabweiser ist so ausgeführt, daß die Ausstellbewegung des Windabweisers bzw. des Zusatzabweisers abhängig von der Fahrzeuggeschwindigkeit, der Deckelstellung, des Ausmaßes der freigelegten Dachöffnung und/oder vom Schalldruck im Inneren des Fahrzeugs erfolgt, indem beispielsweise entsprechende Sensoren oder Zwangssteuerungen vorgesehen sind. Damit soll vermieden werden, daß beispielsweise die Zusatzabweiser oder der Windabweiser unnötig stark ausgestellt werden, wenn noch gar keine Wummergeräusche zu erwarten sind oder detektiert wurden.

Vorzugsweise ist das Antriebsseil in wenigstens zwei getrennte Abschnitte unterteilt, die über eine federnde Kupplungsvorrichtung miteinander verbunden sind. Durch die Zwischenschaltung einer federnden Kupplungsvorrichtung wird bei Überlastung des Antriebsseils eine Zugentlastung, eine Art "Puffer" geschaffen, die einerseits einen Spielausgleich gewährleistet und die andererseits bei der Montage der Vorrichtung, insbesondere bei der Montage des Antriebsseils, das ja spielfrei geführt sein muß, ein kurzzeitiges "Längen" des Antriebsstrangs durch Einfedern der Kupplungsvorrichtung zuläßt.

Bei der bevorzugten Ausführungsform ist die Kupplungsvorrichtung so ausgebildet, daß sie, in der ausgestellten Position des Zusatzabweisers, bei Aufbringen einer vertikal nach unten gerichteten manuellen Kraft auf den Zusatzabweiser einfedert und den antriebsseitigen Abschnitt des Antriebsseils zugentlastet. Die Kupplungsvorrichtung hat vorzugsweise einen so großen Federweg, daß der Zusatzabweiser vollständig nach unten wenigstens bis nahezu in die eingefahrene Position zurückgeschwenkt werden kann, wenn ein Insasse den Zusatzabweiser manuell nach unten drückt.

Die Kupplungsvorrichtung ist darüber hinaus z.B. so ausgeführt, daß sie beim Ein- und Ausfahren des Zusatzabweisers nicht einfedert, d.h. die Kupplungsvorrichtung stellt keinen zusätzlichen Federantrieb für den Zusatzabweiser dar. Damit ist auch die Position des Zusatzabweisers von Vorrichtung zu Vorrichtung exakter vorbestimmbar, denn beim Ein- und Ausfahren des Zusatzabweisers ist das gesamte Antriebsseil als starr zu betrachten.

Gemäß einer bevorzugten Ausführungsform weist die Kupplungsvorrichtung zwei um eine gemeinsame Achse drehbare, zueinander verdrehbare und über ein Federelement miteinander gekoppelte Hebel auf. An jedem dieser Hebel ist ein Ende eines Seilabschnitts befestigt. Diese Hebelmimik erlaubt eine flache, platzsparende Ausbildung der Kupplungsvorrichtung nahe des Windabweisers selbst. Vorzugsweise ist die Kupplungsvorrichtung auch unmittelbar in der Nähe des Windabweisers angebracht, wodurch die träge Masse des windabweiserseitigen Antriebsstrangs recht gering ist.

Besonders vorteilhaft ist es, wenn wenigstens einer der zwei Seilabschnitte durch eine, kein Werkzeug erfordernde Verbindung lösbar an der Kupplungsvorrichtung befestigt ist. Ein Beispiel hierfür ist eine am Seilabschnitt vorgesehene Öse, die um einen Fortsatz an der Kupplungsvorrichtung greift. Beim Transport und bei der Montage können die Seilabschnitte noch entkoppelt voneinander bleiben. So könnten erst bei der Endmontage beim Fahrzeughersteller die Seilabschnitte miteinander gekoppelt werden. Dies reduziert die Gefahr einer übermäßigen Seilbelastung bis zu diesem Zeitpunkt erheblich. Darüber hinaus kann auch die Demontage sehr einfach erfolgen. Überlicherweise ist, wie gesagt, die Kupplungsvorrichtung unmittelbar in der Nähe des Rahmens des Schiebe-Hebe-Dachs angeordnet, so daß der wesentlich längere im Rahmen geführte Seilabschnitt schwer montierbar ist. Zum Auswechseln des Zusatzabweisers muß deshalb nur der kurze Seilabschnitt vom vorderen Rahmenabschnitt des Schiebe-Hebe-Dachs bis zum Zusatzabweiser selbst gelöst und demontiert werden.

Eine bevorzugte Ausführungsform sieht ferner vor, daß der Zusatzabweiser zweiteilig ausgebildet ist, mit einem ersten, am Windabweiser angebrachten Teil und einem damit schwenkbar verbundenen, gegenüber dem Windabweiser nach oben vorstehenden, zweiten Teil. Das erste und das zweite Teil sind mittels eines Hebels, z.B. eines Parallelogramms miteinander gekoppelt, welcher für ein Ausschwenken des zweiten Teils am Ende der Schwenkbewegung des ersten Teils sorgt. Mittels der Hebelverbindung läßt sich der Zusatzabweiser in der Grundposition zusammenklappen und, ohne daß ein separater Antrieb für das zweite Teil vorgesehen sein muß, auseinanderklappen.

Das Antriebsseil für den Zusatzabweiser ist bei der bevorzugten Ausführungsform an einem in einem Führungskanal eines Schiebe-Hebedachdeckels laufenden Mitnehmer befestigt. Mitnehmer und Antriebsseil werden beim Öffnen des Schiebe-Hebedachs am Ende des Verfahrwegs des Deckels verschoben. Dadurch wird der Zusatzabweiser ausgestellt.

Ferner kann vorgesehen sein, daß die Kupplungsvorrichtung an der Unterseite des Windabweisers befestigt ist, also an einem verschwenkbaren Teil, das, wenn es nach oben verschwenkt ist, eine wesentlich bessere Zugänglichkeit für die Montage und Demontage des Antriebsseils erlaubt als beispielsweise der Rahmen oder der Führungskanal des Schiebe-Hebedachs.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine vereinfachte Längsschnittansicht durch eine erfindungsgemäße Vorrichtung, gemäß einer ersten Ausführungsform,
- Figur 2 eine Längsschnittansicht der erfindungsgemäßen Vorrichtung gemäß einer zweiten Ausführungsform bei einem Windabweiser in Grundstellung,
- Figur 3 die Vorrichtung nach Figur 2 in ausgefahrener Stellung,
- Figur 4 die erfindungsgemäße Vorrichtung gemäß weiterer Ausgestaltungen
- Figur 5 eine weitere Ausführungsform der erfindungsgemäßen Vorrichtung in Grundstellung, und
- Figur 6 die Ausführungsform nach Figur 5 in ausgefahrener Stellung.

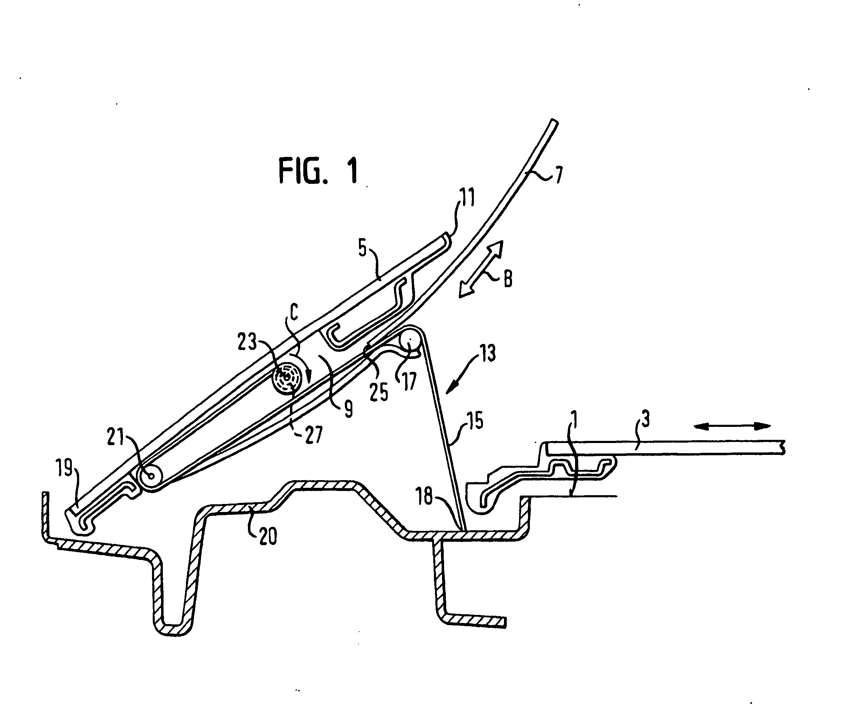

In Figur 1 ist eine Vorrichtung zur Lenkung der Luftströmung im Bereich einer Dachöffnung 1 dargestellt. Die Dachöffnung 1 kann durch einen Deckel 3 eines Schiebe- oder Schiebehebedachs geöffnet werden. Vor der Dachöffnung 1 ist die Vorrichtung angeordnet. Die Vorrichtung umfaßt einen Windabweiser 5, der sich über die gesamte Breite der Dachöffnung 1 erstreckt. In der Grundstellung schließt der Windabweiser 5 bündig mit dem Rest der Außenhaut des Fahrzeugs ab. In der dargestellten ausgefahrenen Stellung ist der Windabweiser 5 schräg nach außen ausgestellt, was über einen nicht dargestellten, bekannten Mechanismus, z. B. über einen motorischen Antrieb oder dergleichen erfolgen kann. Teil der Vorrichtung sind auch Zusatzabweiser 7, die eine Breite von ca. 20 cm haben und im Bereich der seitlichen Enden des Windabweisers 5 liegen sowie an diesem befestigt sind. Der Windabweiser 5 hat auf seiner Unter- oder Rückseite einen kassettenförmigen Aufnahmeraum 9 für jeden Zusatzabweiser 7, in dem dieser in der Grundstellung (nicht ausgefahrene Stellung) des Windabweisers 5 untergebracht ist. Der Zusatzabweiser ist also unterseitig an dem Windabweiser 7 direkt oder, über die Kassette, indirekt angebracht. Aus dem Aufnahmeraum 9 kann der zugeordnete Zusatzabweiser 7 beim Bewegen des Windabweisers 5 in seine ausgefahrene Stellung längs einer Bahn B bewegt werden. In der Grundstellung steht der Zusatzabweiser 7 nach hinten gegenüber dem Rand 11 nicht vor.

Der Begriff Grundstellung wird im folgenden für den Windabweiser 5 dann verwandt, wenn dieser bündig mit der Außenhaut des Fahrzeugs verläuft, und für den Zusatzabweiser 7, wenn dieser vollständig in dem Aufnahmeraum 9 untergebracht ist. Die ausgefahrene Stellung für den Windabweiser 5 ist die mit seinem hinteren Rand 11, auch hintere Stirnseite genannt, nach oben gestellte Position und für den Zusatzabweiser 7 die ausgefahrene Position, wenn er deutlich über den hinteren Rand 11 nach oben vorsteht, wie in Figur 1 dargestellt, und am Rand 11 entlang bewegt wurde.

Jeder Zusatzabweiser 7 besitzt eine eigene mechanische Steuervorrichtung 13, die auf der Rückseite des Windabweisers 5 vorgesehen ist. Die Steuervorrichtung umfaßt ein flexibles Kraftübertragungsmittel 15 in Form eines Bandes oder eines Seiles, welches an einer Koppelungsstelle 18 am Rahmen 20 des Schiebe- oder Schiebehebedachs und damit permanent (d.h. während des gesamten Schwenkwinkels des Windabweisers und der Bewegungsbahn des Zusatzabweisers) und unmittelbar am Fahrzeugdach und nahe der Öffnung 1 unverschiebbar befestigt ist. Das flexible Kraftübertragungsmittel 15 verläuft dann an einer nahe des hinteren Randes 11 vorgesehenen, hinteren Umlenkrolle 17 herum, im wesentlichen parallel zum Seitenrand des Windabweisers in Richtung zum vorderen Rand 19, wo eine vordere Umlenkrolle 21 am Windabweiser 5 befestigt ist, um die vordere Umlenkrolle 21 herum bis zu einem Aufrollmechanismus in Form einer Aufrollerwelle 23, die ähnlich wie ein Gurtaufroller eines Fensterrolladens ausgeführt ist und eine integrierte Aufwickelfeder 27 besitzt. Die Aufwickelfeder 27, die allgemeiner gesagt einen Federmechanismus zur Schaffung eines Kraftspeichers darstellt, ist bestrebt, das flexible Kraftübertragungsmittel 15 in Richtung des Pfeiles C aufzuwickeln. Mittels des Aufrollmechanismus wird das Kraftübertragungsmittel zwischen seiner dachfesten Koppelungsstelle 18 und seiner Befestigung an der Aufrollerwelle 23 in jeder Position des Windabweisers 5 und des Zusatzabweisers 7 gestrafft.

Der Zusatzabweiser 7 ist an seinem unteren Rand am flexiblen Kraftübertragungsmittel, welches als Zugmittel ausgeführt ist, an einer Stelle 25 befestigt, also zwischen den Enden des Kraftübertragungsmittels 15.

In der Grundstellung von Windabweiser 5 und Zusatzabweiser 7 ist ein Großteil des Kraftübertragungsmittels 15 auf der Welle 23 aufgewickelt. Wenn der Deckel 3 nach hinten geschoben wird, soll der Windabweiser 5 ausgestellt werden. Mit Beginn der Ausstellbewegung des Windabweisers 5 bewegt sich die hintere Umlenkrolle 17 nach oben, wobei die vordere Umlenkrolle 17 kaum oder überhaupt nicht nach oben bewegt wird. Durch diese Schwenkbewegung der hinteren Umlenkrolle 17 nach oben wird das flexible Kraftübertragungsmittel 15 zunehmend von der Welle 23 abgerollt, entgegen der Kraft der Aufwickelfeder 27. Der Windabweiser 5 greift also an der mechanischen Steuervorrichtung mit dem flexiblen Kraftübertragungsmittel an und verschiebt sie. Die Stelle 25, an der der Zusatzabweiser 7 angebracht ist, wandert mit der Ausstellbewegung des Windabweisers 5 zunehmend näher zur hinteren Umlenkrolle 17, so daß der Zusatzabweiser 7 entlang der Bahn B an dem hinteren Rand 11 vorbei weiter nach oben bewegt wird, bis in die vollständig ausgefahrene Stellung, welche in Figur 1 dargestellt ist.

Ist der Windabweiser 5 flacher gestellt, so ist aufgrund der Zwangskoppelung über die mechanische Steuervorrichtung 13 jeder Zusatzabweiser 7 nicht so weit ausgefahren, wie in Figur 1 dargestellt. Vielmehr befinden sich die Zusatzabweiser 7 in einer Zwischenstellung, in der sie geringfügiger über den hinteren Rand 11 nach oben emporragen.

Wird der Windabweiser 5 wieder abgesenkt, senkt sich auch die hintere Umlenkrolle 17. Die Aufwickelfeder 27 wickelt das flexible Kraftübertragungsmittel 15 wieder auf und bewegt damit die Stelle 25 näher zur vorderen Umlenkrolle 21 und den zugeordneten Zusatzabweiser 7 in den Aufnahmeraum 9 hinein.

Die zuvor gemachten Ausführungsformen stellen klar, daß jeder Zusatzabweiser 7 gemäß eines Verfahrens in seine ausgefahrene Stellung gebracht wird, bei der aus der Bewegung des Windabweisers 5 relativ zum Fahrzeugdach (hier des Rahmens 20) durch Vorsehen einer mechanischen Koppelung (hier der mechanischen Steuervorrichtung 13) eine Verschiebekraft abgeleitet wird, die den Zusatzabweiser 7 aktiv in Richtung zur und sogar bis in die ausgefahrene Stellung bewegt.

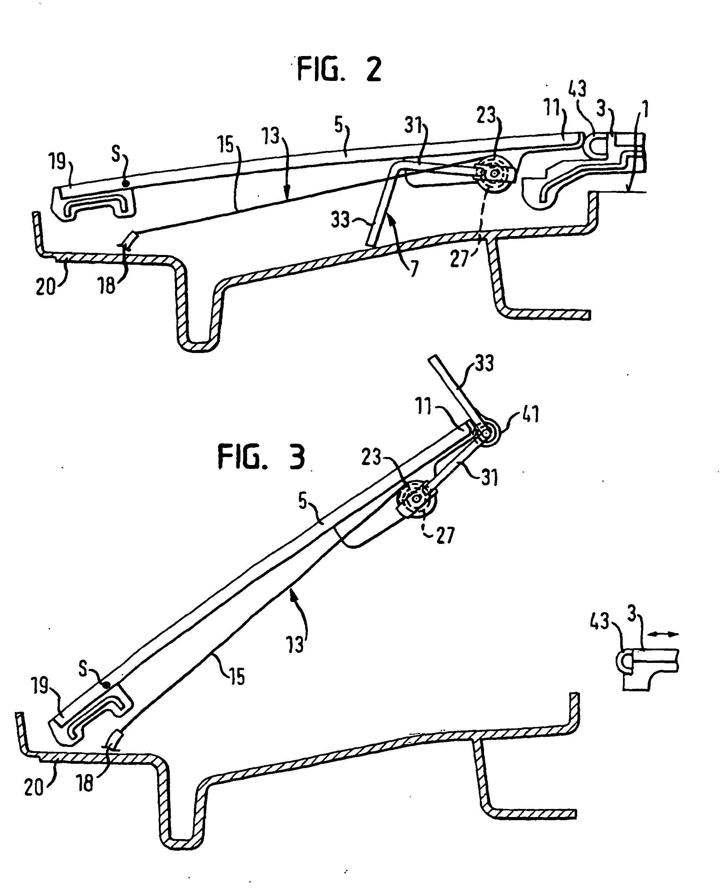

Die Ausführungsformen nach den Figuren 2 und 3 zeigen die Vorrichtung samt der mechanischen, eine Zwangssteuerung erzeugenden Steuervorrichtung, die jedoch ohne Umlenkrollen arbeitet. Für funktionsgleiche Teile wird das entsprechende Bezugszeichen beibehalten. Im Gegensatz zur Ausführungsform nach Figur 1 ist die Koppelungsstelle 18 am Rahmen 20 nahe des vorderen Randes 19 vorgesehen. Nahe des hinteren Randes 11 ist an der Rückseite des Windabweisers 5 der Aufrollmechanismus mit der Welle 23 und der integrierten Aufwickelfeder 27 vorgesehen. Mit der Welle 23 ist auch der Zusatzabweiser 7 verbunden, der hier in Seitenansicht als einteiliger starrer L-förmiger Winkel mit zwei etwa gleichlangen Schenkeln ausgeführt ist. Ein Schenkel 31 ist nahe seines freien Endes mit der Welle 23 verbunden, der andere Schenkel 33 steht in Grundstellung gemäß Figur 2 nach unten ab, er ragt gegenüber dem Rand 11 nach hinten nicht vor. Wie Figur 3 zu entnehmen ist, ist die Koppelungsstelle 18 sehr nahe an der Schwenkachse S des Windabweisers 5. Wenn der Windabweiser 5 ausgestellt wird, nimmt er die Welle 23 mit und bewegt damit auch das flexible Kraftübertragungsmittel 15.

Es kommt zu einem Abwickeln von Kraftübertragungsmittel 15 von der Welle 23. Der Zusatzabweiser 7 wird mit der Welle 23 in die in Figur 3 dargestellte ausgefahrene Stellung verschwenkt, in der der Schenkel 33 am Rand 11 entlang nach oben bewegt wird, bis er gegenüber dem Rand 11 nach oben deutlich vorsteht. Bei dieser Ausführungsform ist also die Schwenkachse für den Zusatzabweiser 7 gleichzeitig die Achse des Aufrollmechanismus.

Beim Absenken des Windabweisers 5 wird der Zusatzabweiser 7 eingeschwenkt, indem die Aufwickelfeder 27 die Welle 23 in Pfeilrichtung dreht.

Alternativ kann die mechanische Steuervorrichtung bei dieser Ausführungsform auch als Bowdenzug ausgeführt sein. Mittels des Bowdenzuges lassen sich eventuell Umlenkrollen vermeiden.

Alternativ kann zwischen den Schenkeln 31, 33 eine Schwenkachse vorhanden sein, an der eine Feder 41 den Schenkel 33 in die 90°-Stellung belastet. Bei höherer Windgeschwindigkeit stellt sich dadurch der Schenkel 33 flacher.

Da der Schenkel 33 gegenüber dem Schenkel 31 federbelastet ist, kann er unterschiedliche Neigungswinkel in Abhängigkeit von der Windgeschwindigkeit einnehmen. Dies führt zur Minimierung der Windgeräusche und Zugerscheinungen im Inneren des Fahrzeugs. Alternativ könnte natürlich auch der bahngeführte Zusatzabweiser 7 gemäß Fig. 1 z. B. aus zwei federnd verbundenen Abschnitten bestehen, um eine Neigungswinkelanpassung zu erzielen.

Mit 43 ist eine Dichtung, die am vorderen Rand des Deckels 3 befestigt ist, bezeichnet, welche unmittelbar am Rand 11 in der Grundstellung, bei geschlossenem Deckel 3, anliegt.

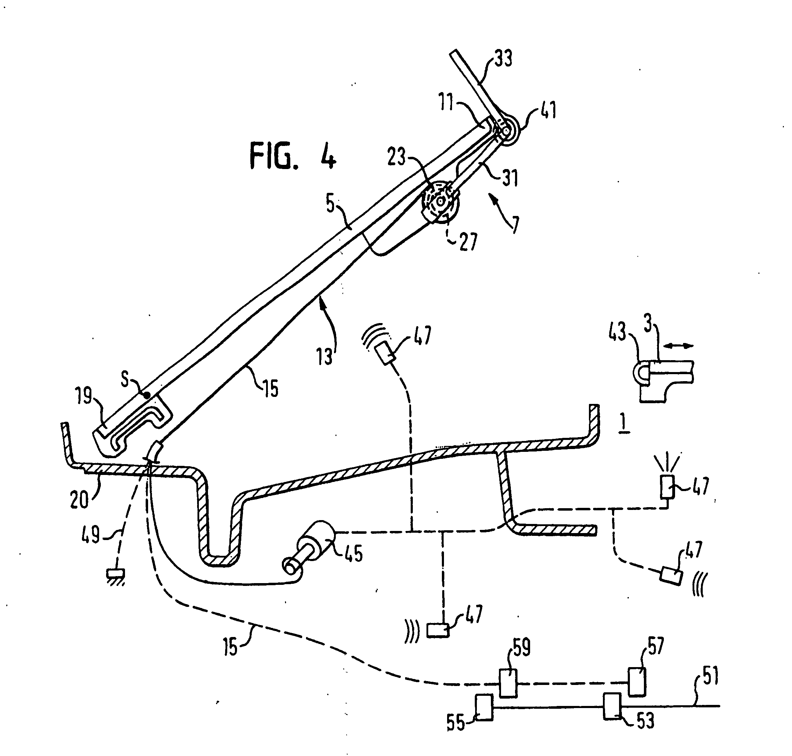

In Fig. 4 sind mehrere Ausführungsformen in einer Zeichnung zusammengefaßt. Die Steuervorrichtung 13 umfaßt neben dem flexiblen Kraftübertragungsmittel 15 z. B. noch einen Elektromotor 45, der das flexible Kraftübertragungsmittel 15 auf- und/oder abrollt, wobei die Feder 27 für eine ausreichende Vorspannung sorgt. Der Motor 45 kann über eine Sensorvorrichtung 47 angesteuert werden, die beispielsweise die Ausstellposition des Windabweisers 5, die Öffnungsweite der Dachöffnung 1 (d.h. wie weit geöffnet), die Position des Deckels 3, den Schalldruck im Inneren des Fahrzeugs oder die Fahrgeschwindigkeit 7 erfaßt. Abhängig von einem oder mehrerer dieser Parameter wird der Zusatzabweiser ausgestellt bzw. mehr oder weniger weit ausgefahren. Der Elektromotor 45 ist starr mit dem Dach gekoppelt, d.h. er stellt ein dachfestes Teil dar.

Alternativ könnte die Steuervorrichtung auch als magnetische Einrichtung ausgebildet sein, z. B. indem im Bereich des hinteren Randes 11 ein elektrisch betätigbarer Magnet angebracht ist, der den Zusatzabweiser mehr oder weniger stark anzieht oder abstößt, um ihn zu verschwenken.

Die Steuervorrichtung kann auch einen sogenannten Memory-Draht 49 aufweisen, der beispielsweise an das Kraftübertragungsmittel 15 angekoppelt ist. Unter Memory- Draht wird ein Draht aus einer Formgedächtnislegierung, z.B. NiTi, verstanden, der temperaturabhängig seine Länge deutlich ändert.

Vorzugsweise werden die Zusatzabweiser 7 erst dann über den Rand 11 bei jeder Ausführungsform vortreten, wenn mehr als die Hälfte der Dachöffnung 1, vorzugsweise erst mehr als 75% der Dachöffnung 1 freigelegt sind, der Deckel 3 also fast komplett nach hinten verfahren wurde.

Auch die Ausstellung des Windabweisers 5 kann abhängig von den zuvor erwähnten Parametern erfolgen. Auch hier ist natürlich ein motorischer Antrieb oder ein mechanischer, zwangsgekoppelter Antrieb möglich.

Der Windabweiser 5 und/oder der Zusatzabweiser 7 können auch an den Seilantrieb des Deckels 3 gekoppelt sein. Das durch einen Elektromotor angetriebene entsprechende Seil 51 hat beispielsweise verschiedene Mitnehmer 53, 55, die an Mitnehmer 57, 59 am Kraftübertragungsmittel 15 anstossen, um je nach Position des Deckels 3 den Windabweiser 5 und/oder den Zusatzabweiser 7 zu bewegen. Die Mitnehmer 53, 55 zusammen mit dem Seil 51 stellen damit ein am Fahrzeugdach verfahrbares Teil dar, mit dem die Steuervorrichtung gekoppelt ist. Natürlich sind sämtliche in Fig. 4 dargestellten Optionen auch bei der Ausführungsform nach den Figuren 1 und 2 denkbar.

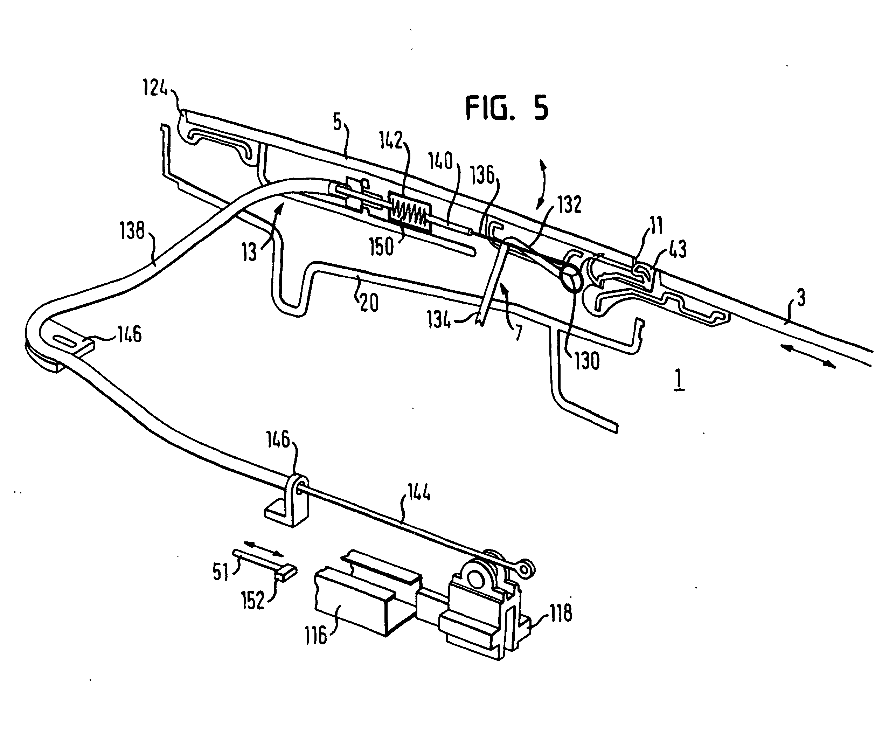

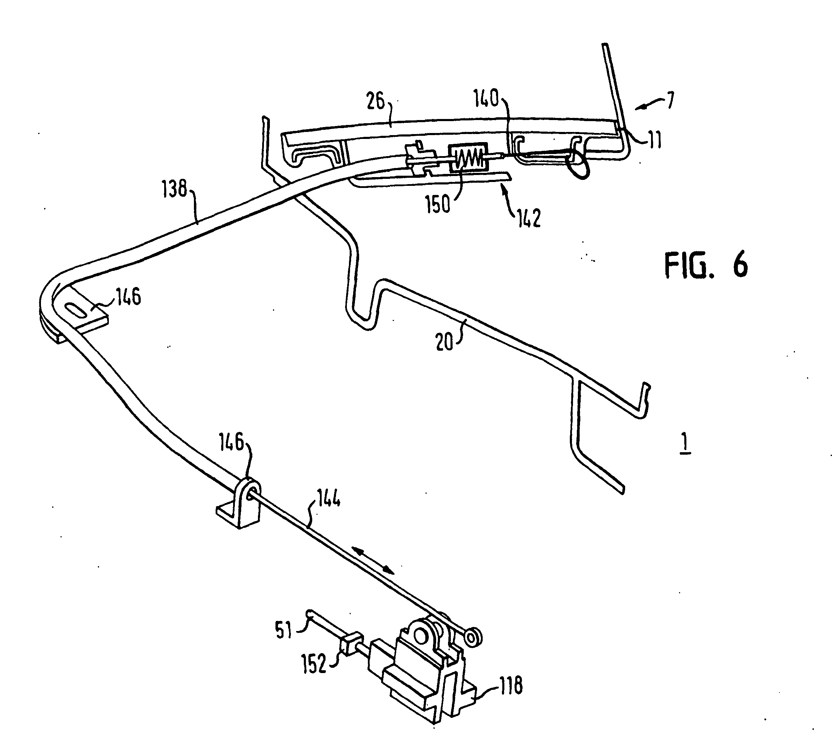

Die Ausführungsform mit dem Seilantrieb für Windabweiser und Zusatzabweiser ist in den Figuren 5 und 6 genauer dargestellt.

In Figur 5 ist ein Fahrzeugschiebe-Hebedach im Bereich des vorderen Randes dargestellt. Die Teile sind teilweise auseinandergezogen dargestellt, um mehr Übersicht zu erhalten. Ein Rahmen 20 des Schiebe-Hebedachs umgibt eine Dachöffnung 1 die durch einen ausstellbaren und nach hinten verfahrbaren Deckel 3 geschlossen ist. Der Rahmen 20, der am Dach unverschiebbar befestigt ist, hat seitliche Führungskanäle 116 integriert, in denen mehrere Mitnehmer 118 und Gleiter längsverschiebar aufgenommen sind. Mehrere solcher Gleiter sind an dem Deckel 3 befestigt und dienen seiner Führung in Längsrichtung. Diese Gleiter sind nicht dargestellt, sie sind Stand der Technik. Die Gleiter werden über ein drucksteif geführtes Seil bewegt, wobei das Seil 51 in dem Führungskanal 116 läuft und mit einzelnen Gleitern verbunden ist, so daß durch die Verschiebung der Gleiter eine Ausstellbewegung und eine Verfahrbewegung des Deckels 3 erreicht wird. Ein Elektromotor sorgt für die Bewegung des Seils 51. Vorderhalb des Deckels 3 ist ein über die gesamte Breite der Dachöffnung 1 verlaufender Windabweiser 5 angebracht, der um seinen vorderen Rand 124 herum nach oben schwenkbar ist, wie mit den Pfeilen dargestellt. Die vordere Schwenkachse ist nicht explizit dargestellt. Der Windabweiser 5 wird dann ausgeschwenkt, wenn der Deckel 3 nach hinten verfahren wird. Auf der Unterseite des Deckels 3, im Bereich seines hinteren Randes 11 sind über die Breite des Windabweisers 5 mehrere Zusatzabweiser 7 angebracht, die über eine Achse 130 verschwenkbar sind. In der in Figur 5 dargestellten Stellung ist der Zusatzabweiser eingeschwenkt, d.h. in der Grundstellung dargestellt. Der Zusatzabweiser ist eine ca. 20 cm breite L-förmige Klappe. Der Zusatzabweiser hat zwei Abschnitte, nämlich einen ersten Abschnitt 132, der an der Schwenkachse 130 exzentrisch angebracht ist und einen zweiten, in der dargestellten Stellung nach unten abstehenden Abschnitt 134. Um die Schwenkachse 130 herum verläuft ein flexibles Zugübertragungsmittel in Form eines Antriebsseils 136 als Teil eines Bowdenzugs 138. Das Antriebsseil hat zwei Abschnitte, nämlich einen windabweiserseitigen Seilabschnitt 140, der von der Befestigung am Zusatzabweiser 7 bis zu einer federnden Kupplungsvorrichtung 142 verläuft, die auf der Unterseite des Windabweisers befestigt ist. Der zweite Abschnitt, auch antriebsseitiger Abschnitt 144 genannt, verläuft von der Kupplungsvorrichtung 142 längs des vorderen Abschnitts des Rahmens 20, über mehrere Seilumlenkungen 146 bis zum Mitnehmer 118 in dem Führungskanal 116.

Der Windabweiser 5, der Zusatzabweiser 7, das Antreibsseil 136 mit seinen zwei Abschnitten und die Kupplungsvorrichtung 142 bilden eine Vorrichtung zur Lenkung der Luftströmung im Bereich der Fahrzeugdachöffnung 1.

Die Seilabschnitte 140, 144 sind in der Kupplungsvorrichtung 142 nicht miteinander unmittelbar verbunden, sondern es ist ein federndes Element 150 zwischengeschaltet, das in Figur 5 nur symbolisch dargestellt ist. Das federnde Element sorgt für eine Zugentlastung und für einen Spielausgleich.

Die Funktionsweise der erfindungsgemäßen Vorrichtung wird im folgenden kurz erläutert. Wird der Deckel 3 über das Seil 51 nach hinten verfahren, wird die Dachöffnung 1 freigegeben. Ab Erreichen einer bestimmten Öfmungsposition wird der Windabweiser 5 nach oben geschwenkt. Dies erfolgt beispielsweise über den Seilantrieb des Deckels 3. Bevorzugt dann, wenn etwa 75 % der Dachöffnung 1 freigelegt sind, wird erst der Zusatzabweiser 7 ausgestellt. Ein am Seil 51 lösbar befestigter und in seiner Position einstellbarer Anschlag 152 erreicht schließlich den Mitnehmer 118 und verschiebt diesen und damit den Seilabschnitt 144 in Pfeilrichtung. In der Kupplungsvorrichtung 142 ist das federnde Element 150 so ausgeführt, daß beim Ausstellen und Einfahren des Zusatzabweisers 7 keine Federwirkung auftritt und die Bewegung des Seilabschnitts 144 unmittelbar in eine Bewegung des Seilabschnitts 140 umgesetzt wird. Der Seilabschnitt 140 schwenkt den Zusatzabweiser 7 nach oben, wie in Figur 6 dargestellt. Wird von außen eine mechanische Kraft z.B. durch den Insassen auf den Zusatzabweiser 7 ausgeübt, die nach unten gerichtet ist, so bewirkt die Kupplungsvorrichtung 142, indem das federnde Element elastisch nachgibt, daß ein Einschwenken des Zusatzabweisers 7 erlaubt wird, ohne daß dies zu einer Verschiebung des Seilabschnitts 144 am Mitnehmer 118 führt.

In der nicht ausgefahrenen Stellung liegt der Zusatzabweiser 7 unter dem Windabweiser 5, ohne nach hinten über den Rand 11 vorzustehen. Auch bei dieser Ausführungsform, wie bei den vorherigen, liegt der Deckel 3 in Fahrzeugrichtung hinter dem Windabweiser 5 und schlägt mit seiner Dichtung 43 unmittelbar an den Rand 11 an, ohne daß der Zuatzabweiser 7 in der Grundstellung dazwischenliegt.

Die mechanischen Steuervorrichtungen sind bei der Ausführungsform nach Fig. 5 für Wind- und Zusatzabweiser über den Seilantrieb miteinander gekoppelt. Die Steuervorrichtung 13 umfasst vorliegend das Seil 51, den Bowdenzug 138 und die Kupplungsvorrichtung 142.

## Patentansprüche

1. Vorrichtung zur Lenkung der Luftströmung im Bereich einer Dachöffnung (1), mit
einem Windabweiser (5), der in seiner ausgefahrenen Stellung in Strömungsrichtung schräg aufwärts gerichtet ist und dessen Oberseite in Strömungsrichtung schräg aufwärts gerichtet und unmittelbar von der Luft angeströmt ist, und
wenigstens einem Zusatzabweiser (7), der am Windabweiser (5) beweglich befestigt ist und gegenüber dem hinteren Rand (11) des Windabweisers (5) vortreten kann,
wobei Windabweiser (5) und Zusatzabweiser (7) jeweils von einer Grund- in eine ausgefahrene Stellung beweglich sind,
**dadurch gekennzeichnet,**
**daß** der Zusatzabweiser (7) in seiner nicht ausgefahrenen Stellung an der der Luftströmung abgewandten Unterseite des Windabweisers (5) befestigt ist und sich bei der Bewegung in die ausgefahrene Stellung an der hinteren Stirnseite des Windabweisers (5) entlang bis, in Strömungsrichtung längs der Oberseite gesehen, zu und über die Oberseite nach oben bewegt.

2. Vorrichtung nach Anspruch 1, **dadurch gekennzeichnet, daß** ein die Dachöffnung verschließender Deckel vorgesehen ist und daß der Windabweiser (5) und der Deckel bei geschlossenem Dach hintereinander angeordnet sind, wobei der Deckel vorzugsweise unmittelbar an die hintere Stirnseite des Windabweisers (5) anstößt und vorzugsweise eine elastische Dichtung zwischen Windabweiser (5) und Deckel liegt.

3. Vorrichtung nach einem der vorhergehenden Ansprüche, **dadurch gekennzeichnet, daß** der Zusatzabweiser (7) in der nicht ausgefahrenen Stellung des Windabweisers (5) gegenüber diesem nach hinten nicht vorsteht.

4. Vorrichtung nach einem der vorhergehenden Ansprüche, **dadurch gekennzeichnet, daß** der Deckel in der nicht ausgefahrenen Stellung des Windabweisers (5) unmittelbar an die hintere Stirnseite des Windabweisers (5) anschließt, ohne daß der Zusatzabweiser (7) zwischen die Stirnseite und den Deckel ragt.

5. Vorrichtung nach einem der vorhergehenden Ansprüche, **dadurch gekennzeichnet, daß** eine Steuervorrichtung für den Windabweiser (5) und/oder für den Zusatzabweiser (7) vorgesehen sind/ist, die die Ausstellbewegung des Windabweisers (5) und/oder des Zusatzabweisers (7)
mechanisch, mechanisch zwangsgesteuert, elektrisch, magnetisch oder über einen Memory-Draht herbeiführt.

6. Vorrichtung nach einem der vorhergehenden Ansprüche, **dadurch gekennzeichnet, daß** eine Sensorvorrichtung (47) für den Windabweiser (5) und/oder für den Zusatzabweiser (7) vorgesehen ist, die die Austellbewegung des Windabweisers (5) und/oder des Zusatzabweisers (7) abhängig von der Fahrzeuggeschwindigkeit, der Deckelstellung, der freigelegten Dachöffnung und/oder vom Schalldruck im Inneren des Fahrzeugs steuert.

7. Vorrichtung nach Anspruch 5 oder 6, **gekennzeichnet durch** wenigstens eine mechanische Steuervorrichtung (13) für den Zusatzabweiser (7), die mit dem Zusatzabweiser (7) verbunden ist und permanent unmittelbar mit dem Fahrzeugdach oder mit einem am Fahrzeugdach verfahrbaren Teil gekoppelt ist, wobei die mechanische Steuervorrichtung (13) eine vorzugsweise dachfeste Koppelungsstelle (18) am Fahrzeugdach besitzt.

8. Vorrichtung nach Anspruch 5 oder 7, **dadurch gekennzeichnet, daß** der Windabweiser (5) zumindest bei der Ausstellbewegung die Steuervorrichtung (13) so verschiebt, daß durch die Verschiebung der Zusatzabweiser (7) in Richtung seiner ausgefahrenen Stellung bewegt wird.

9. Vorrichtung nach einem der vorhergehenden Ansprüche, **gekennzeichnet durch** wenigstens eine mechanische Steuervorrichtung (13) für den Zusatzabweiser (7), die mit dem Zusatzabweiser (7) verbunden ist und die Ausstellbewegung des Zusatzabweisers (7) herbeiführt und **durch** einen mit der Steuervorrichtung (13) gekoppelten Kraftspeicher, der bestrebt ist, die Steuervorrichtung (13) zu bewegen und den Zusatzabweiser (7) in die Grundstellung und/oder in die ausgefahrene Stellung zu bringen.

10. Vorrichtung nach einem der vorhergehenden Ansprüche, **dadurch gekennzeichnet, daß** wenigstens eine mechanische Steuervorrichtung (13), die mit dem Windabweiser (5) und/oder dem Zusatzabweiser (7) verbunden ist und die Ausstellbewegung des Windabweisers (5) und/oder des Zusatzabweisers (7) herbeiführt, vorgesehen ist, wobei die Steuervorrichtung ein flexibles Kraftübertragungsmittel (15) aufweist, das vorzugsweise permanent auch unmittelbar mit dem Fahrzeugdach oder einem am Fahrzeugdach verfahrbaren Teil gekoppelt ist.

11. Vorrichtung nach einem der vorstehenden Ansprüche, **dadurch gekennzeichnet, daß** wenigstens eine mechanische Steuervorrichtung (13) für den Zusatzabweiser (7), die mit dem Zusatzabweiser (7) verbunden ist und die Ausstellbewegung des Zusatzabweisers (7) herbeiführt, vorgesehen ist, wobei die Steuervorrichtung (13) ein flexibles Zugmittel ist, dessen erstes Ende nahe der Dachöffnung dachfest angebracht ist, dessen zweites Ende am Windabweiser (5) oder dem Dach befestigt ist, wobei zwischen den Enden der Windabweiser (5) am Zugmittel im Bereich seines hinteren Randes (11) angreift und das Zugmittel beim Ausstellen verschiebt.

12. Vorrichtung nach einem der vorhergehenden Ansprüche, **dadurch gekennzeichnet, daß** eine mechanische Koppelung zwischen Windabweiser (5) und Zusatzabweiser (7) vorgesehen ist, wodurch aus der Bewegung des Windabweisers (5) relativ zum Fahrzeugdach eine Verschiebekraft abgeleitet wird, die den Zusatzabweiser (7) aktiv in Richtung zur, vorzugsweise bis in die ausgefahrene Stellung bewegt.

13. Vorrichtung nach einem der vorhergehenden Ansprüche, **dadurch gekennzeichnet, daß** der Zusatzabweiser schwenkbar im Bereich des hinteren Randes des Windabweisers an diesem befestigt ist.

14. Vorrichtung nach einem der vorhergehenden Ansprüche, **dadurch gekennzeichnet, daß** wenigstens ein Antriebsseil (136) zum Ausstellen des Zusatzabweisers (7) vorgesehen ist, wobei das Antriebsseil (136) insbesondere entfernt vom Windabweiser (5) zu dessen Bewegung angetrieben wird.

15. Vorrichtung nach Anspruch 14, **dadurch gekennzeichnet, daß** das Antriebsseil (136) in wenigstens zwei getrennte Abschnitte (140, 144) unterteilt ist, die über eine federnde Kupplungsvorrichtung (142) miteinander verbunden sind.

16. Vorrichtung nach Anspruch 15, **dadurch gekennzeichnet, daß** die Kupplungsvorrichtung (142) so ausgebildet ist, daß sie, in der ausgestellten Position des Zusatzabweisers (7), bei Aufbringen einer vertikal nach unten gerichteten, manuellen Kraft auf den Zusatzabweiser (7) einfedert und den antriebsseitigen Seilabschnitt (144) zugentlastet.

## Claims

1. A device for guiding the airflow in the region of a roof opening (1), comprising
a wind deflector (5) which in its extended position is directed obliquely upwards in the direction of flow, and the upper side of which is directed obliquely upwards in the direction of flow and is immediately acted upon by the air, and
at least one additional deflector (7) which is movably fastened to the wind deflector (5) and adapted to protrude with respect to the rear edge (11) of the wind deflector (5),
the wind deflector (5) and the additional deflector (7) each being movable from a normal position into an extended position,
**characterized in that**
the additional deflector (7), in its not extended position, is fastened to the underside of the wind deflector (5) facing away from the airflow, and when moving into the extended position, moves upward along the rear end face of the wind deflector (5) as far as to the upper side and above the same, as seen in the direction of flow along the upper side.

2. The device according to claim 1, **characterized in that** a cover is provided which closes the roof opening and that the wind deflector (5) and the cover are arranged so as to lie one behind the other when the roof is closed, the cover preferably immediately adjoining the rear end face of the wind deflector (5) and preferably an elastic seal being provided between the wind deflector (5) and the cover.

3. The device according to any of the preceding claims, **characterized in that** the additional deflector (7) does not protrude to the rear beyond the wind deflector (5) when the latter is in the not extended position.

4. The device according to any of the preceding claims, **characterized in that** the cover immediately adjoins the rear end face of the wind deflector (5) in the not extended position of the latter, without the additional deflector (7) protruding between the end face and the cover.

5. The device according to any of the preceding claims, **characterized in that** a control device is provided for the wind deflector (5) and/or the additional deflector (7), which control device brings about the raising motion of the wind deflector (5) and/or the additional deflector (7)
mechanically, in a manner so as to be mechanically constrained, electrically, magnetically or through a memory wire.

6. The device according to any of the preceding claims, **characterized in that** a sensor device (47) is provided for the wind deflector (5) and/or the additional deflector (7), which sensor device controls the raising motion of the wind deflector (5) and/or the additional deflector (7) as a function of the vehicle speed, the cover position, the opening surface of the roof opening and/or the sound pressure in the interior of the vehicle.

7. The device according to claim 5 or 6, **characterized by** at least one mechanical control device (13) for the additional deflector (7), which is connected to the additional deflector (7) and permanently and directly coupled with the vehicle roof or with an element provided to travel on the vehicle roof, the mechanical control device (13) comprising a vehicle roof coupling point (18) which preferably is fixed with respect to the roof.

8. The device according to claim 5 or 7, **characterized in that** the wind deflector (5) displaces the control device (13) at least during the raising motion such that the additional deflector (7) is moved in the direction toward its extended position by this displacement.

9. The device according to any of the preceding claims, **characterized by** at least one mechanical control device (13) for the additional deflector (7), which is connected with the additional deflector (7) and brings about the raising motion of the additional deflector (7), and by an energy storing device coupled with the control device (13) and striving to move the control device (13) and to bring the additional deflector (7) into the normal position and/or the extended position.

10. The device according to any of the preceding claims, **characterized in that** at least one mechanical control device (13) is provided which is connected with the wind deflector (5) and/or the additional deflector (7) and brings about the raising motion of the wind deflector (5) and/or the additional deflector (7), the control device including a flexible force-transmitting means (15) which preferably is also permanently coupled to the vehicle roof or to an element provided to travel on the vehicle roof.

11. The device according to any of the preceding claims, **characterized in that** at least one mechanical control device (13) is provided for the additional deflector (7), which is connected with the additional deflector (7) and brings about the raising motion of the additional deflector (7), the control device (13) being a flexible traction means which has its first end mounted to the vehicle roof at a place close to the roof opening and its second end mounted to the wind deflector (5) or to the vehicle roof, the wind deflector (5) engaging the traction means in the region of its rear edge (11) between the ends and displacing the traction means during raising.

12. The device according to any of the preceding claims, **characterized in that** a mechanical coupling between the wind deflector (5) and the additional deflector (7) is provided, whereby a shifting force is derived from the motion of the wind deflector (5) relative to the vehicle roof, which shifting force actively moves the additional deflector (7) in the direction towards the extended position, preferably as far as into the extended position.

13. The device according to any of the preceding claims, **characterized in that** the additional deflector is pivotally fastened to the wind deflector in the region of the rear edge of the latter.

14. The device according to any of the preceding claims, **characterized in that** at least one drive cable (136) is provided for raising the additional deflector (7), the drive cable (136) being driven, for moving the wind deflector (5), in particular at a point remote from the wind deflector.

15. The device according to claim 14, **characterized in that** the drive cable (136) is divided in at least two separate sections (140, 144) which are connected with each other by means of an elastic coupling device (142).

16. The device according to claim 15, **characterized in that** the coupling device (142) is designed so as to resiliently yield in the raised position of the additional deflector (7) upon application of a manual force onto the additional deflector (7) in a direction vertically downwards, and to provide a strain relief for the drive side cable section (144).

## Revendications

1. Dispositif d'orientation du flux d'air dans la région d'une ouverture de toit (1), comportant
un déflecteur de vent (5) qui, dans sa position sortie, est dirigé en biais vers le haut en direction de flux et dont la face supérieure est dirigée en biais vers le haut en direction de flux et sur lequel l'air s'écoule directement, et
au moins un déflecteur additionnel (7) qui est fixé de façon mobile sur le déflecteur de vent (5) et qui peut s'avancer par rapport au bord postérieur (11) du déflecteur de vent (5),
le déflecteur de vent (5) et le déflecteur additionnel (7) étant chacun mobiles depuis une position de base jusque dans une position sortie,
**caractérisé en ce que**
dans sa position non sortie, le déflecteur additionnel (7) est fixé sur la face inférieure du déflecteur de vent (5), qui est détournée du flux d'air et, lors du mouvement dans la position sortie, il se déplace vers le haut le long de la face frontale postérieure du déflecteur de vent (5) jusque et au-delà de la face supérieure, vu le long de la face supérieure en direction de flux.

2. Dispositif selon la revendication 1, **caractérisé en ce qu'**il est prévu un couvercle fermant l'ouverture de toit et **en ce que** le déflecteur de vent (5) et le couvercle sont agencés l'un derrière l'autre lorsque le toit est fermé, le couvercle prenant appui de préférence directement sur la face frontale postérieure du déflecteur de vent (5) et, de préférence, un joint élastique reposant entre le déflecteur de vent (5) et le couvercle.

3. Dispositif selon l'une des revendications précédentes, **caractérisé en ce que** dans la position non sortie du déflecteur de vent (5), le déflecteur additionnel (7) ne fait pas saillie par rapport à celui-ci vers l'arrière.

4. Dispositif selon l'une des revendications précédentes, **caractérisé en ce que** dans la position non sortie du déflecteur de vent, le couvercle est directement adjacent à la face frontale postérieure du déflecteur de vent (5), sans que le déflecteur additionnel (7) fasse saillie entre la face frontale et le couvercle.

5. Dispositif selon l'une des revendications précédentes, **caractérisé en ce qu'**il est prévu un dispositif de commande pour le déflecteur de vent (5) et/ou pour le déflecteur additionnel (7), qui provoque le mouvement de soulèvement du déflecteur de vent (5) et/ou du déflecteur additionnel (7) par voie mécanique, mécanique à commande contrainte, électrique, magnétique ou via un fil à mémoire.

6. Dispositif selon l'une des revendications précédentes, **caractérisé en ce qu'**il est prévu un capteur (47) pour le déflecteur de vent (5) et/ou pour le déflecteur additionnel (7), qui commande le mouvement de soulèvement du déflecteur de vent (5) et/ou du déflecteur additionnel (7) en fonction de la vitesse du véhicule, de la position du couvercle, de l'ouverture de toit dégagée et/ou de la pression acoustique à l'intérieur du véhicule.

7. Dispositif selon la revendication 5 ou 6, **caractérisé par** au moins un dispositif de commande mécanique (13) pour le déflecteur additionnel (7), lequel est relié au déflecteur additionnel (7) et accouplé en permanence directement au toit de véhicule ou à une partie déplaçable sur le toit de véhicule, le dispositif de commande mécanique (13) possédant sur le toit de véhicule un point d'accouplement (18) de préférence solidaire du toit.

8. Dispositif selon la revendication 5 ou 7, **caractérisé en ce qu'**au moins lors du mouvement de soulèvement, le déflecteur de vent (5) déplace le dispositif de commande (13) de telle sorte que le déflecteur additionnel (7) est amené, en raison du déplacement, en direction de sa position sortie.

9. Dispositif selon l'une des revendications précédentes, **caractérisé par** au moins un dispositif de commande mécanique (13) pour le déflecteur additionnel, (7) qui est relié au déflecteur additionnel (7) et qui provoque le mouvement de soulèvement du déflecteur additionnel (7), et par un accumulateur de force accouplé au dispositif de commande (13), qui tend à déplacer le dispositif de commande (13) et à amener le déflecteur additionnel (7) jusque dans la position de base et/ou dans la position sortie.

10. Dispositif selon l'une des revendications précédentes, **caractérisé en ce qu'**il est prévu au moins un dispositif de commande mécanique (13) qui est relié au déflecteur de vent (5) et/ou au déflecteur additionnel (7) et qui provoque le mouvement de soulèvement du déflecteur de vent (5) et/ou du déflecteur additionnel (7), le dispositif de commande présentant un moyen de transmission de force flexible (15) qui est aussi accouplé de préférence en permanence directement au toit de véhicule ou à une partie déplaçable sur le toit de véhicule.

11. Dispositif selon l'une des revendications précédentes, **caractérisé en ce qu'**il est prévu au moins un dispositif de commande mécanique (13) pour le déflecteur additionnel (7), qui est reliée au déflecteur additionnel (7) et qui provoque le mouvement de soulèvement du déflecteur additionnel (7), le dispositif de commande (13) étant un moyen de traction flexible dont la première extrémité est montée de manière solidaire au toit à proximité de l'ouverture de toit, dont la deuxième extrémité est fixée sur le déflecteur de vent (5) ou sur le toit, le déflecteur de vent (5) s'engageant, entre les extrémités, sur le moyen de traction dans la région de son bord postérieur (11) et déplaçant le moyen de traction lors du soulèvement.

12. Dispositif selon l'une des revendications précédentes, **caractérisé en ce qu'**il est prévu un accouplement mécanique entre le déflecteur de vent (5) et le déflecteur additionnel (7), grâce à quoi une force de déplacement est dérivée du mouvement du déflecteur de vent (5) par rapport au toit de véhicule, laquelle déplace le déflecteur additionnel (7) activement en direction de, et de préférence jusqu'à la position sortie.

13. Dispositif selon l'une des revendications précédentes, **caractérisé en ce que** le déflecteur additionnel est fixé à pivotement sur le déflecteur de vent dans la région du bord postérieur de celui-ci.

14. Dispositif selon l'une des revendications précédentes, **caractérisé en ce qu'**au moins un câble d'entraînement (136) est prévu pour soulever le déflecteur additionnel (7), le câble d'entraînement (136) étant entraîné en particulier à distance du déflecteur de vent (5) pour provoquer le mouvement de celui-ci.

15. Dispositif selon la revendication 14, **caractérisé en ce que** le câble d'entraînement (136) est divisé en au moins deux tronçons (140, 144) séparés qui sont reliés l'un à l'autre par l'intermédiaire d'un dispositif d'accouplement (142) élastique.

16. Dispositif selon la revendication 15, **caractérisé en ce que** le dispositif d'accouplement (142) est réalisé de telle sorte que dans la position soulevée du déflecteur additionnel (7), il cède élastiquement lorsqu'on applique une force manuelle dirigée verticalement vers le bas sur le déflecteur additionnel (7) et soulage de traction le tronçon de câble (144) côté entraînement.
